# EUROPEAN PATENT SPECIFICATION

(11) **EP 1 854 260 B1**
(45) Date of publication and mention of the grant of the patent: **20.02.2013**
(21) Application number: 05708631.6
(22) Date of filing: 01.03.2005
(51) Int. Cl.: H04L 29/06, H04L 12/24

(54) **ACCESS RIGHTS CONTROL IN A DEVICE MANAGEMENT SYSTEM**
ZUGANGSRECHTEREGELUNG IN EINEM EINRICHTUNGSVERWALTUNGSSYSTEM
REGULATION DE DROITS D'ACCES DANS UN SYSTEME DE GESTION D'APPAREILS

(43) Date of publication of application: 14.11.2007
(73) Proprietor: Nokia Corporation, 02150 Espoo (FI)
(72) Inventor: PIISPANEN, Jussi, FIN-33610 Tampere (FI); KAAPPA, Eero, FIN-33230 Tampere (FI)
(74) Representative: Cohausz & Florack
(86) International application number: PCT/IB2005/000518
(87) International publication number: WO 2006/092642

(56) References cited:
- US-A1- 2004 083 472
- US-A1- 2004 123 241

## Description

### FIELD OF THE INVENTION

This invention relates to a method, a device, a module, a server, a system and software applications for managing one or more management objects of a device.

### BACKGROUND OF THE INVENTION

As a result of technological development, networked and mobile/wireless devices are becoming more and more complex. Consequently, connected devices are also becoming more and more difficult to manage, closely resembling the common modern dilemma of personal computer configuration and management. Hence, there is a strong need arising from consumers, corporate information management departments, and operators for a tool for managing devices conveniently and effectively.

Device management, as currently under standardization by the Open Mobile Alliance (OMA), addresses exactly these problems. Device management is the generic term used for technology that allows third parties to carry out the difficult procedures of configuring mobile devices on behalf of the end user (customer). Third parties could for instance be wireless operators, service providers or corporate management departments.

Through device management, an external party can for instance remotely set parameters, conduct troubleshooting servicing of terminals, install or upgrade software.

Device management is performed by one or several servers, often denoted as management servers, that perform management operations on management objects in a device via a device management protocol. Therein, said management objects are the entities which can be manipulated by the management operations carried over the device management protocol. A management object may be as small as an integer, or as large and complex as a background picture or a screen saver.

A device that supports device management usually contains a management tree. The management tree organizes all available management objects in the device as a hierarchical tree structure where all management objects may for instance be uniquely addressed by a Uniform Resource Identifier (URI). The URI for a management object is then constructed by starting at the root of the management tree, represented by a forward slash ("/"), and, as the tree is traversed down to the management object in question, each management object's name is appended to the previous ones using a forward slash "/" as the delimiting character. However, instead of organizing management objects hierarchically in a management tree, also an arrangement of the management objects in a list, or in other structures, or without a structure, is possible.

Each management object is associated with access rights, which define which servers are allowed to perform management operations on said management object. If said management objects of a device are organized in a management tree, a server that has access rights to a parent management object of the management tree is entitled to change the access rights of the child management objects of said parent management object. Consequently, if a server has access rights to the root management object of the management tree, it can control the access rights of all management objects of said management tree.

management objects of said device, usually the access rights of the root management object of the management tree are set to a wildcard, so that the first server that manages the device can claim ownership of the root management object and, by changing the access rights of the child management objects, also of the entire management tree. This first-come-first-serve-approach may be problematic in particular with respect to the management of management objects that are related to sensitive functions of said device and thus should be protected from access by arbitrary servers.

US patent application publication US 2004/0383472 pertains to managing one or more management objects of a device. It discloses a system that employs SyncML Device Management (DM) for updating firmware in mobile handsets and other devices. Therein, a SyncML management client of a mobile handset employs new commands, inter-alia, a command for saving an update package provided by a SyncML server in an appropriate management object.

### SUMMARY OF THE INVENTION

In view of the above-mentioned problems, an improved method, device, module, server, system and improved software applications are proposed for managing one or more management objects of a device.

It is proposed a method for managing one or more management objects of a device, wherein each of said management objects is associated with access rights that define which servers from a set of one or more servers are allowed to perform management operations on said management object, wherein said device maintains a certificate that is associated with a root key, and wherein a server that is considered to maintain said root key is entitled to control the access rights of all of said management objects of said device.

Said device may for instance be a mobile terminal of a wireless communication system, and then said servers may be a part of a core network of said wireless communication system or of a network connected to said core network. Equally well, said device may be a terminal in a wired network, for instance a Local Area Network (LAN), and then said servers may be a part of said LAN or a network connected to said LAN, as for instance the internet.

Said device-contains management objects, on which management operations such as adding, replacing, deleting or similar operations can be executed by one or several servers, wherein said management operations may for instance be requested by an instance in said server, transferred to a client in said device via a protocol, and then executed by said client. For each management object, it is at least implicitly defined by access rights which server is allowed to perform which type of management operation on said management object.

Said device maintains a certificate that is associated with a root key. Said certificate may for instance comprise a public key of an asymmetric data encrypting technique, which may be used to encrypt data, which data then in turn can be decrypted by a matching private key, for instance said root key, or vice versa. The contents of said certificate, including said public key, may be signed by said root key, and said signature may be checked by said device by using the public key contained in said certificate to authenticate said public key contained in said certificate. Equally well, said certificate may only contain said public key without any further contents and/or root key signatures, which may be advantageous if said certificate is integrated into said device during its manufacturing and thus can be considered to be trustworthy. Said certificate may be associated with said root key by inheritance, for instance said public key comprised in said certificate may be inherited from said root key.

Said device may for instance be involved in a Public Key Infrastructure (PKI) system that comprises several devices and only one server, i.e. a root PKI server, which maintains the root key and signs certificates that are maintained by said devices. Said certificates then may allow said devices to authenticate information contained in said certificate, e.g. a public key matching said root key, or other information that is signed by said root key, as for instance further certificates that comprise further public keys that match respective other private keys. Equally well, said certificates may allow said devices to authenticate a server identification that has been signed with said root key.

According to the present invention, only a server that is considered by said device to maintain said root key is entitled to control the access rights of all of said management objects of said device. Said server may for instance actually maintain said root key, and may use this root key to authenticate itself to said device, for instance by signing a server identification package (for instance including the server's ID) with said root key and sending said signed server identification package to said device. Equally well, said server may not maintain said root key itself, but may use an external certification authority to sign a server identification package (for instance including the server's ID) with said root key. Said server then may send this signed server identification package to said device to get access to said management objects of said device, which does not recognize that said server does not itself maintain said root key. In both cases, thus the device considers the server to maintain said root key.

If said management objects are organized in a management tree, said server may be granted access rights to a root management object of said management tree, and said server then may control the access rights of the child management objects of said root management object by changing their associated access rights, and so forth for the child management objects of said child management objects. Thus the access rights to all management objects of a device are (at least implicitly) assigned to a specific server that is considered to maintain said root key via said certificate that is maintained by said device. This certificate can be made available to said device during its manufacturing or configuring process or later and is associated with said root key in a manner that only said server that is considered to maintain said root key is initially entitled to control all management objects of said device. For instance, access rights of said management objects may only be controlled by a server that signs its control request with said root key, which can be checked by means of said certificate.

Said server being considered to maintain said root key may for instance be a server that is maintained by a manufacturer of said device, and said certificate may have been included into the device during the manufacturing process. Said certificate may for instance have been stored in a memory of said device during its manufacturing and may be trusted by said device. Thus only the manufacturer can determine, for each management object of said device, which servers shall gain access to said management object. For instance, the manufacturer may decide to transfer access rights to certain management objects to an operator of a wired or wireless communication system that deploys said device, or even to a user of said device.

In this way, and unlike to the prior art approach, it can be assured that access to vital management objects of said device is initially granted to a trustworthy server only, i.e. a server that is considered to maintain said root key, and not to any server only because said server was the first to change the access rights of the root management object of the management tree.

According to an embodiment of the present invention, said certificate has been made available to said device during its manufacturing or configuration. This avoids the necessity of transferring said sensitive certificate from a server to said device. Furthermore, it may then be possible to consider a public key contained in said certificate as trustworthy without requiring an authentication of said public key.

According to a further embodiment of the present invention, said device uses said certificate to authenticate information that has been signed with said root key. Said certificate may for instance comprise a public key that matches said root key, and the authenticity of said signature then may be checked based on said public key. For instance, if said device shall be provided with a new public key to establish a secure connection between said device and a content server, said server that is considered to maintain said root key may sign a new certificate that contains said new public key (matching a new private key of said content server) and provide said content server with said new certificate. The content server then may transfer the new certificate to the device, and by checking the signature of the new certificate (by using the public key contained in the certificate maintained by said device and matching said root key), the device may authenticate the new public key contained in said new certificate and establish a secure connection with said content server. Equally well, said certificate may be used to authenticate server identification information that has been signed with said root key. Said server identification information may for instance serve to decide if a server can be considered to maintain said root key or not.

According to a further embodiment of the present invention, said management objects of said device form a management tree, wherein a server that controls the access rights of a parent management object in said management tree also controls access rights of child management objects of said parent management object, and wherein said server that is considered to maintain said root key controls the access rights of a root management object of said management tree. This embodiment of the present invention is particularly easy to implement, because only the access rights to the root management object of the management tree need to be defined. Alternatively, if said management objects are not organized in a management tree, setting access rights of each management objects separately to said server that is considered to maintain said root key may be more complex.

According to a further embodiment of the present invention, said management operations comprise adding and/or deleting and/or executing and/or getting and/or replacing a management object or components thereof. Said components may for instance be properties of said management objects, which properties provide meta information on said management objects such as for instance access rights, or a format or type of said management object. Said components may equally well be a value or structure assigned to said management object.

According to a further embodiment of the present invention, said respective access rights of a respective management object are represented by an access rights list that defines for each management operation out of a set of one or more management operations that are possible for said respective management object which server is allowed to perform said management operation, wherein said servers are represented by server identifiers in said access rights list. Said access rights list may for instance indicate which servers are allowed to replace a management object and which servers are allowed to add a management object.

According to a further embodiment of the present invention, all management objects of said device are associated with access rights that depend on keys associated with said root key. Said system then may for instance comprise different levels of keys corresponding to different amounts of access rights, for instance, a root key may grant access to all management objects of a device, whereas a level-1 key may grant access to management objects of a layer below the root management object in a management tree, and so forth. Said keys may for instance be generated by the same server of a Certification Authority (CA) and may all be associated with the same root key, they may for instance be derived from or signed with said root key. Instead of using access rights lists as representations of said access rights associated with each management object, then access rights completely based on a may be used. Said device then may comprise several certificates, each associated with one of said different keys.

According to a further embodiment of the present invention, said certificate and said root key are associated with a Public Key Infrastructure system. A Public Key Infrastructure (PKI) system enables users of a basically unsecure public network such as the Internet to securely and privately exchange data and money through the use of a public and a private cryptographic key pair that is obtained and shared through a trusted authority. The PKI system provides for said certificate that can identify an individual or an organization, and directory services that can store and, when necessary, revoke the certificate. A number of different vendor approaches and services are emerging. Also, an Internet standard for PKI is being worked on. This embodiment of the present invention thus merges the area of device management and the area of PKI in an advantageous manner, because PKI certificates and root PKI keys that are already available and approved are now used as said certificate and root key to control access to management objects of said device.

According to a further embodiment of the present invention, said device is a mobile terminal in a wireless communication system or a part thereof.

It is further proposed a device in a device management system, said device comprising means for executing managing operations that can be performed by one or more servers on one or more management objects of said device, wherein each of said management objects is associated with access rights that define which of said servers are allowed to perform management operations on said management object, wherein said device maintains a certificate that is associated with a root key, and wherein a server that is considered to maintain said root key is entitled to control the access rights of all of said management objects of said device.

It is further proposed a software application executable in a device in a device management system, said software application comprising program code for causing said device to execute managing operations that can be performed by one or more servers on one or more management objects of said device, wherein each of said management objects is associated with access rights that define which of said servers are allowed to perform management operations on said management object, wherein said device maintains a certificate that is associated with a root key, and wherein a server that is considered to maintain said root key is entitled to control the access rights of all of said management objects of said device.

It is further proposed a module for a device in a device management system, wherein said device maintains a certificate that is associated with a root key, said module comprising means for executing managing operations that can be performed by one or more servers on one or more management objects of said device, wherein each of said management objects is associated with access rights that define which of said servers are allowed to perform management operations on said management object, and wherein a server that is considered to maintain said root key is entitled to control the access rights of all of said management objects of said device.

It is further proposed a software application executable in a module for a device in a device management system, wherein said device maintains a certificate that is associated with a root key, said software application comprising program code for causing said module to execute managing operations that can be performed by one or more servers on one or more management objects of said device, wherein each of said management objects is associated with access rights that define which of said servers are allowed to perform management operations on said management object, and wherein a server that is considered to maintain said root key is entitled to control the access rights of all of said management objects of said device.

It is further proposed a server in a device management system, said server comprising means for performing managing operations on one or more management objects of a device, wherein each of said management objects is associated with access rights that define which servers from a set of one or more servers are allowed to perform management operations on said management object, wherein said device maintains a certificate that is associated with a root key, and wherein a server that is considered to maintain said root key is entitled to control the access rights of all of said management objects of said device.

It is further proposed a software application executable in a server in a device management system, said software application comprising program code for causing said server to perform managing operations on one or more management objects of a device, wherein each of said management objects is associated with access rights that define which servers from a set of one or more servers are allowed to perform management operations on said management object, wherein said device maintains a certificate that is associated with a root key, and wherein a server that is considered to maintain said root key is entitled to control the access rights of all of said management objects of said device.

It is further proposed a device management system, comprising at least one device and at least one server, wherein said server comprises means for performing managing operations on one or more management objects of said device, wherein each of said management objects is associated with access rights that define which servers from a set of one or more servers are allowed to perform management operations on said management object, and wherein said device comprises means for executing said managing operations, wherein said device maintains a certificate that is associated with a root key, and wherein a server that is considered to maintain said root key is entitled to control the access rights of all of said management objects of said device.

These and other aspects of the invention will be apparent from and elucidated with reference to the embodiments described hereinafter.

### BRIEF DESCRIPTION OF THE FIGURE

In the figures show:
- Fig. 1a:: A device management system according to a first exemplary embodiment of the present invention;
- Fig. 1b:: a device management system according to a second exemplary embodiment of the present invention;
- Fig. 2:: an exemplary management tree of a device according to an embodiment of the present invention; and
- Fig. 3:: a flowchart of a method for device management according to an embodiment of the present invention.

### DETAILED DESCRIPTION OF THE INVENTION

The present invention proposes to entitle a server that is considered to maintain a root key that is associated with a certificate maintained by a device to control the access rights of all management objects of said device.

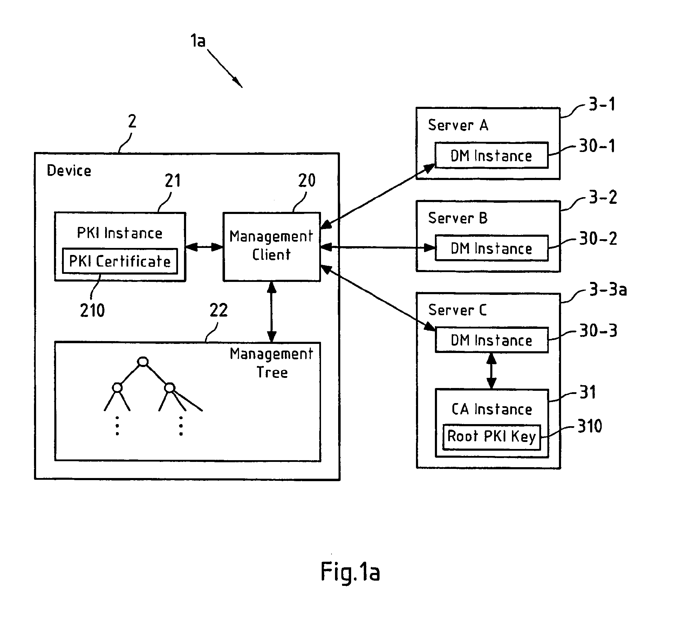

Embodiments of this inventive concept will be described now with reference to Figs. 1a-3, wherein a device management system in the context of a wireless communication system is exemplarily chosen. It should however be noted that the present invention is also applicable in wire-bound networks. Furthermore, said device is exemplarily assumed to be involved in a Public Key Infrastructure (PKI) system, so that the public and root keys are public PKI and root PKI keys, respectively, and the certificate maintained by the device is a PKI certificate.

It should further be noted that the description of the introductory part of this patent specification may be used to support this detailed description of the invention.

Fig. 1a depicts a Device Management (DM) system 1a according to a first exemplary embodiment of the present invention. The DM system 1a comprises one device 2, and a server A 3-1, a server B 3-2 and a server C 3-3a. Said device 2 may for instance be a mobile terminal of a wireless communication system, and said servers 3-1, 3-2 and 3-3a then may represent servers in the core network of said wireless communication system or in a network that is connected to said core network, as for instance the internet.

Each of said three servers 3-1, 3-2 and 3-3a possesses a DM instance 30-1, 30-2 and 30-3, respectively, and is capable of performing management operations on Management Objects (MOs) of said device 2. It is readily understood that said servers 3-1, 3-2 and 3-3a may also perform management operations on further devices, which are not depicted in Fig. 1a.

Device 2 of the DM system 1a comprises a management client 20, which interacts with the DM instances 30-1, 30-2 and 30-3 of the servers 3-1, 3-2 and 3-3a via a management protocol, for instance the SyncML protocol or a derivative thereof, as for instance a management protocol defined by the Open Mobile Alliance (OMA). Via said management protocol, said servers 3-1, 3-2 and 3-3a may request management operations, which are interpreted by said management client 20 and then performed by interacting with a management tree 22 of said device 2.

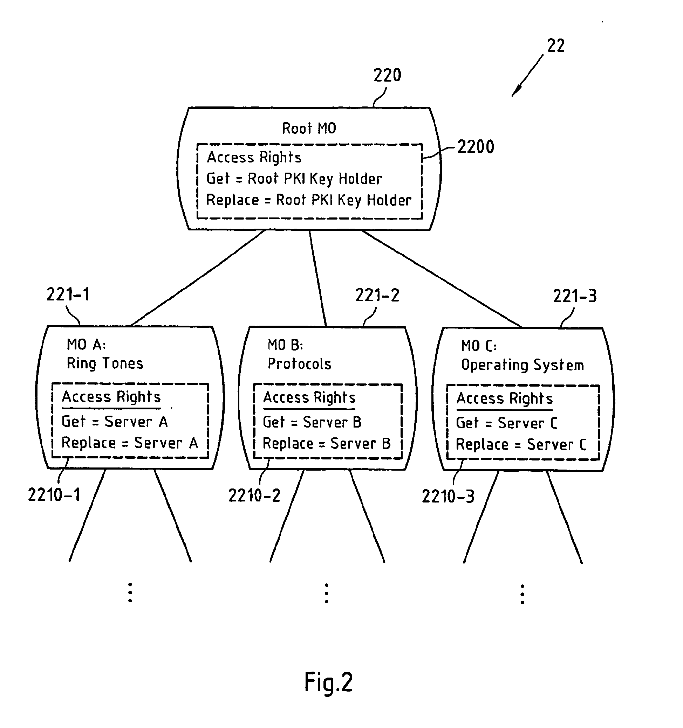

Said management tree 22 represents a hierarchical structure that contains the MOs of said device 2, wherein each of said MOs in said management tree 22 is associated with access rights, which define which servers are allowed to perform certain management operations on said MO. An example of such a management tree 22 will be described below with reference to Fig. 2. Each MO of said management tree 22 represents an entity of said device that lends itself for manipulation by remote servers, wherein said manipulation may for instance effect the operation and/or appearance of said device. An example of a MO may for instance be the background image on a display of a mobile terminal, or a protocol or protocol stack of said mobile terminal. An example for access rights associated with said MO may for instance be a list of servers that are allowed to get (read) a MO and a list of servers that are allowed to replace said MO or contents thereof.

In Fig. 1a, server 3-3a further comprises a Certification Authority (CA) instance 31, which in turn comprises a root PKI key 310. Server 3-3a thus can be understood to maintain said root PKI key 310. This CA instance 31 forms the heart of a PKI, which is a system that allows for secure mutual authentication of its components and of data that is transferred between said components. Within said PKI, said CA instance 31 is the only component that possesses knowledge of said root PKI key 310, which may be understood as a private key in an asymmetric encryption/decryption technique. In an asymmetric encryption/decryption system, a sender uses a public key to encrypt data and/or to sign information, and then a matching private key is used by the receiver to decrypt the data and/or to check the signed information. Equally well, the sender may use its private key for encryption, and then the receiver may use the matching public key for decryption.

In the system 1a of Fig. 1a, the CA instance 31 of server 3-3a comprises said root PKI key 310 and may use this root PKI key 310 to sign a PKI certificate 210, which is comprised in a PKI instance 21 of said device 2. This may for instance be achieved if server 3-3a and its CA instance 31 are under the control of a device manufacturer, which generates one or several PKI certificates 210 and integrates them into said device 2 (and possibly further devices) during or after the manufacturing or configuration process of said device(s). The PKI certificate 210 enables the device 2 to authenticate a public PKI key contained in said PKI certificate 210 and to authenticate further PKI certificates or other information like a server identification package that is signed by said root PKI key 310 and then can be sent to said device 2 to authenticate said server 3-3a as a server that maintains said root PKI key.

Said PKI certificate 210 may for instance comprise the public PKI key matching the root PKI key 310 of said CA instance (which public PKI key may for instance be inherited from said root PKI key 310), an expiration date of the certificate, the name of the issuer (the CA instance 31), a serial number and a signature of the issuer, and may obey the CCITT X.509 international standard or a derivative thereof.

The process of authenticating the public PKI key in this PKI certificate 210 may for instance work as follows: The CA instance 31 chooses the contents of the PKI certificate, except said signature, and uses a hash function on said contents to generate a digital digest (or "digital fingerprint") of said contents. If any part of these contents is modified, this hash function would return a different result. The digital digest is then encrypted with the root PKI key 310 (the private key) to obtain a signature. This signature and the unchanged contents form the PKI certificate 210, which then is made available to the device 2 as described above.

A receiver of this PKI certificate 210 then extracts the public PKI key from the PKI certificate 210, and decrypts the signature of said PKI certificate 210 with said public PKI key to obtain said digital digest. It then performs the same hash function that was performed at the CA instance 31 on the contents of the PKI certificate (except the signature), and compares the result to the digital digest it determined before. If the result and the digital digest are equal, the receiver can be assured that the public PKI key it extracted from the PKI certificate 210 matches the root PKI key with which said PKI certificate 210 was signed, and that the contents of said PKI certificate 210 were not changed since the hashing operation of said CA instance 31.

In Fig. 1a, the PKI instance 21 can be considered as said receiver of said PKI certificate 210, and thus PKI instance 21 trusts the public PKI key which is contained in said PKI certificate 210 and which matches the root PKI key that is maintained by said CA instance 31 in said server 3-3a.

It should be noted that, if said PKI certificate key is integrated into said device 2 by a trustworthy manufacturer, it may be sufficient that said PKI certificate only contains said public PKI key without further contents and/or root key signature, because signature-based authentication then is not required. In this case, the device 2 will be instructed to trust the built-in public PKI key. This does however not exclude the possibility that the PKI certificate 210 is later on replaced by a new PKI certificate issued by CA instance 310 of server 3-3b, or that such a certificate is added to the already existing PKI certificate 210.

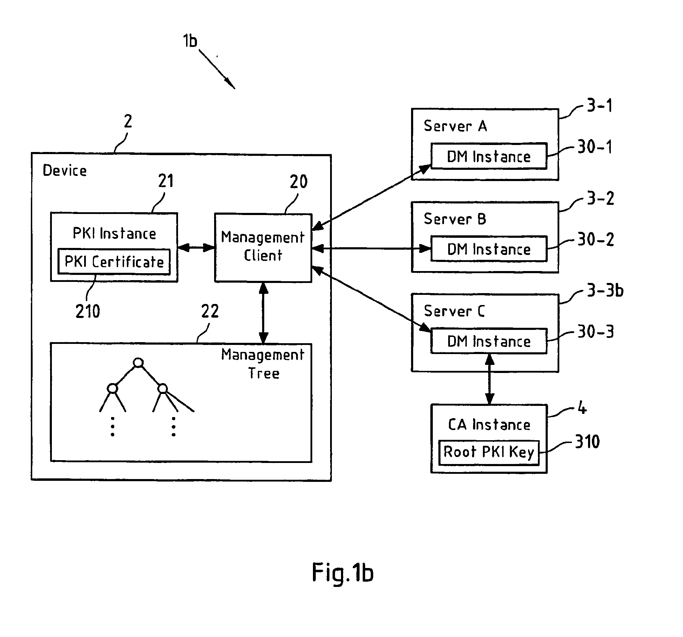

Fig. 1b depicts a DM system 1b according to a second exemplary embodiment of the present invention. Therein, elements with the same function are denoted with the same reference numerals as their counterparts in Fig. 1a. In contrast to the DM system 1a of Fig. 1a, the DM system 1b of Fig. 1b comprises a server 3-3b that does not contain an internal certification authority. Thus server 3-3b of the DM system 1b does not itself maintain a root PKI key 310, i.e. it is not able to sign information with this root PKI key 310 by itself. However, the server 3-3b is capable of interacting with an external certification authority 4, which comprises said root PKI key, and server 3-3b is in particular capable to have information, such as for instance a server identification package that contains a server ID, signed with the root PKI key 310 by said external certification authority 4. This signed identification package then can be sent by said server 3-3b to said device 2. To device 2, server 3-3b then appears to maintain the root PKI key 310. Thus device 2 will grant server 3-3b access to its management tree 22.

The PKI certificate 210 of device 2 in the DM system 1b according to Fig. 1b may for instance have been created and transferred to the device 2 by the certification authority 4. The device then may use the signature of the PKI certificate 210 to authenticate the public PKI key contained therein. Equally well, said PKI certificate 210 may only comprise the public PKI key and may have been stored in the device 2 during the manufacturing process, so that an actual authentication (based on a signature of said PKI certificate) may not be required. However, even in this case, the public PKI key is generated and issued by the certification authority 4.

Fig. 2 depicts an exemplary management tree 22 as it is implemented in device 2 of Figs. 1a and 1b. The management tree 22 comprises a root MO 220, and child MOs 221-1, 221-2 and 221-3 of said root MO 220. Each of said MOs 220, 221-1, 221-2 and 221-3 contains a set of access rights 2200, 2210-1, 2210-2 and 2210-3, respectively, having the shape of an Access rights List (ACL) and defining which servers are allowed to perform management operations on said respective MOs. In the management tree of Fig. 2, only the "Get" and "Replace" management operations are exemplarily considered.

MO 221-1 allows to manipulate the ring tones of said device. According to the ACL 2210-1, only server A (numeral 3-1 in Figs. 1a and 1b) is allowed to read (get) and replace MO 221-1. Server A thus may for instance be considered as a ring tone content provider. Access to MO 221-2, which refers to protocols of said device, is only granted to server B (numeral 3-2 in Figs. 1a and 1b), which may for instance be an operator of a communication system said device 2 is deployed in. Access to MO 221-3, which refers to the operating system of said device, is only granted to server C (numeral 3-3a in Fig. 1a), which may for instance be a manufacturer of said device.

The root MO 220 of said management tree 22 has an ACL 2200 that grants access only to the "Root PKI Key Holder", i.e. the server that is considered to maintain the root PKI key. In the example of Fig. 1a, this would be server C with numeral 3-3a , because it comprises the CA instance 31 which in turn comprises the root PKI key 310. In the example of Fig. 1b, this would be server C with numeral 3-3b.

According to the present invention, only the server that is considered to maintain the root PKI key 310 is allowed to perform management operations on said root MO 220. Keeping in mind that the owner of the ACL of a parent MO (such as the root MO 220 in Fig. 2) of a management tree is allowed to change the ACLs of its child MOs (such as the MOs 221-1, 221-2 and 221-3 in Fig. 2), it is readily clear that the owner of the ACL of the root MO 220 of the management tree 22 can control the ACLs of all MOs in said management tree 22.

If, as it is the case in prior art, the ACL 2200 of the root MO 220 is void (granted to any server), the first server that performs management operations on said root MO 220 may change the ACLs of the entire management tree, so that for example the server A, which is a ring tone content provider, may change the ACL 2210-3 of MO 221-3, which is related to the operating system of the device. The server C, operated by the manufacturer of the device, then may loose the right to manage the operating system of the device, and proper device management would no longer be possible.

The present invention thus proposes to entitle only a server that is considered to maintain the root PKI key 310 that is associated with the PKI certificate 210 that is maintained by the device to control the ACLs of all MOs of said device. This does not inhibit to assign access rights of lower level MOs (e.g. 221-1, 221-2 and 221-3) of said management tree 22 to other servers, or even to assign access rights of said root MO 220 to another server (for instance a server maintained by an operator of a communication system in which said device is deployed). Nevertheless, the basic control of the ACLs of all management objects is initially assigned to the server considered to maintain the root PKI key, for it may be the only server that lends itself for reliable authentication.

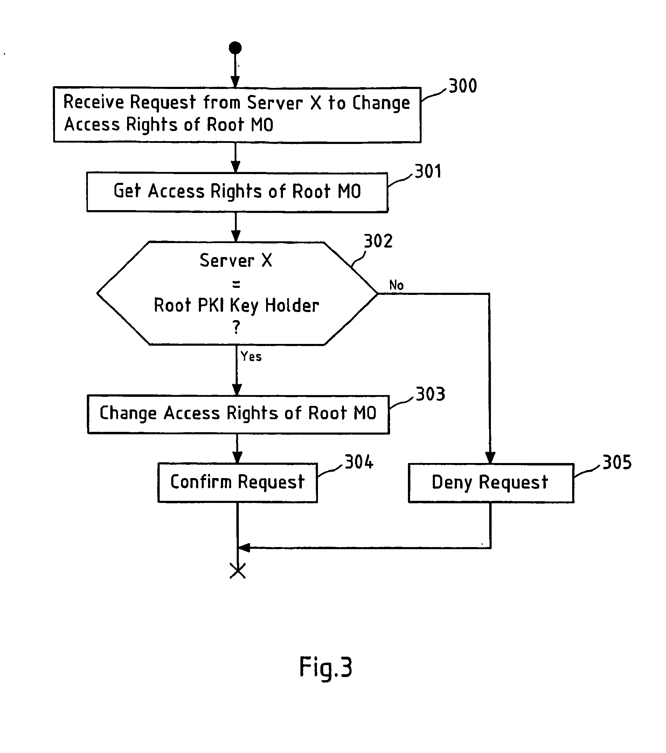

Fig. 3 finally depicts a flowchart of a method for device management according to an embodiment of the present invention. This method may for instance be assumed to be performed by the management client 20 in device 2 (see Fig. 2) upon reception of a request from one of the servers 3-1, 3-2 and 3-3 to change access rights of the root MO 220 of the management tree 22 (see Fig. 1 and 2).

As a prerequisite to the method steps 300-305 of the flowchart of Fig. 3, the management client 20 in device 2 may have obtained a copy of the public PKI key from the PKI certificate 210 that is maintained by PKI instance 21. The PKI certificate 210, and the public PKI key contained therein, may for instance have been flashed into the device 2 during its manufacturing and is trusted by the device 2.

In a first step 300, the management client 20 receives said request from a server X to change the access rights of the root MO 220 of the management tree 22. In a second step 301, the management client 20 then determines the access rights of the root MO 220, for instance by reading out the ACL 2200 of the root MO 220 (see Fig. 2). In case of the root MO 220, the ACL 2200 then indicates that only the "Root PKI Key Holder", i.e. the server that is considered to maintain the root PKI key, is allowed to replace the ACL 2200 of said root MO 220.

In a step 302, it is thus checked if said server X is said "Root PKI Key Holder".

This may for instance be accomplished by checking if a server identification package sent to said device 2 by the requesting server is signed with the root PKI key matching the copy of the public PKI key that is maintained by management client 20 of device 2. This identification may for instance have been signed by said requesting server with said root PKI key by itself (cf. the scenario of Fig. 1a), or may have been signed with said root PKI key by an external certification authority (cf. the scenario of Fig. 1b). If it is determined in step 302 that server X is the server that is considered to maintain the root PKI key, the access rights of the root MO 220 are changed accordingly in a step 303, and a confirmation is sent to said server X in a step 304. Otherwise, no changes are performed, and a deny request is sent to server X in a step 305.

It should be noted that the authentication of the server towards the device by means of the root PKI key may equally well take place before an actual request to perform management operations on management objects of said device is sent to said device.

The invention has been described above by means of preferred embodiments. It should be noted that there are alternative ways and variations which are obvious to a skilled person in the art and can be implemented without deviating from the scope and spirit of the appended claims. In particular, the present invention is not bound to the concept of a management tree, it may equally well be deployed in device management systems where different structures are used for the management objects, and then said server that is considered to maintain said root key may be assigned the access rights of each of said management objects separately. Equally well, in case of the use of a management tree, different levels of keys may be used to grant servers access to different management objects, for instance, access to a root management object may only be granted to a server that is considered to maintain said root key, and access to a child management object of said root management object may be granted to a server that is considered to maintain a second key that is derived (e.g. inherited) from or signed with said root key. Said device may then maintain separate certificates for each of said different keys, respectively.

## Claims

1. A method comprising:
- executing managing operations that can be performed by one or more servers (3-1, 3-2, 3-3a; 3-1, 3-2, 3-3b) on one or more management objects (220, 221-1, 221-2, 221-3) of a device (2), wherein each of said management objects is associated with access rights (2200, 2210-1, 2210-2, 2210-3) that define which of said servers are allowed to perform management operations on said management object, wherein said device maintains a certificate (210) that is associated with a root key (310), and wherein a server (3-3a; 3-3b) that is considered to maintain said root key is entitled to control the access rights of all of said management objects of said device.

2. The method according to claim 1, wherein said device (2) uses said certificate (210) to authenticate information that has been signed with said root key (310).

3. The method according to claim 1, wherein said management objects of said device (2) form a management tree (22), wherein a server (3-1, 3-2, 3-3a; 3-1, 3-2, 3-3b) that controls the access rights of a parent management object (220) in said management tree (22) also controls access rights of child management objects (221-1, 221-2, 221-3) of said parent management object (220), and wherein said server (3-3a; 3-3b) that is considered to maintain said root key (310) controls the access rights of a root management object (220) of said management tree.

4. The method according to claim 1, wherein said management operations comprise adding and/or deleting and/or executing and/or getting and/or replacing a management object (220, 221-1, 221-2, 221-3) or components thereof.

5. The method according to claim 1, wherein said respective access rights of a respective management object (220, 221-1, 221-2, 221-3) are represented by an access rights list (2200, 2210-1, 2210-2, 2210-3) that defines for each management operation out of a set of one or more management operations that are possible for said respective management object which server (3-1, 3-2, 3-3a; 3-1, 3-2, 3-3b) is allowed to perform said management operation, wherein said servers are represented by server identifiers in said access rights list.

6. The method according to claim 1, wherein all management objects (220, 221-1, 221-2, 221-3) of said device (2) are associated with access rights that depend on keys associated with said root key (310).

7. The method according to claim 1, wherein said certificate (210) and said root key (310) are associated with a Public Key Infrastructure system.

8. The method according to claim 1, wherein said device (2) is a mobile terminal in a wireless communication system or a part thereof.

9. A device (2) comprising:
- means (20) for executing managing operations that can be performed by one or more servers (3-1, 3-2, 3-3a; 3-1, 3-2, 3-3b) on one or more management objects (220, 221-1, 221-2, 221-3) of said device,
wherein each of said management objects is associated with access rights (2200, 2210-1, 2210-2, 2210-3) that define which of said servers are allowed to perform management operations on said management object, wherein said device maintains a certificate (210) that is associated with a root key (310), and wherein a server (3-3a; 3-3b) that is considered to maintain said root key is entitled to control the access rights of all of said management objects of said device.

10. The device according to claim 9, wherein said device (2) uses said certificate (210) to authenticate information that has been signed with said root key (310).

11. The device according to claim 9, wherein said management objects of said device (2) form a management tree (22), wherein a server (3-1, 3-2, 3-3a; 3-1, 3-2, 3-3b) that controls the access rights of a parent management object (220) in said management tree (22) also controls access rights of child management objects (221-1, 221-2, 221-3) of said parent management object (220), and wherein said server (3-3a; 3-3b) that is considered to maintain said root key (310) controls the access rights of a root management object (220) of said management tree.

12. The device according to claim 9, wherein said management operations comprise adding and/or deleting and/or executing and/or getting and/or replacing a management object (220, 221-1, 221-2, 221-3) or components thereof.

13. The device according to claim 9, wherein said respective access rights of a respective management object (220, 221-1, 221-2, 221-3) are represented by an access rights list (2200, 2210-1, 2210-2, 2210-3) that defines for each management operation out of a set of one or more management operations that are possible for said respective management object which server (3-1, 3-2, 3-3a; 3-1, 3-2, 3-3b) is allowed to perform said management operation, wherein said servers are represented by server identifiers in said access rights list.

14. The device according to claim 9, wherein all management objects (220, 221-1, 221-2, 221-3) of said device (2) are associated with access rights that depend on keys associated with said root key (310).

15. The device according to claim 9, wherein said certificate (210) and said root key (310) are associated with a Public Key Infrastructure system.

16. The device according to claim 9, wherein said device (2) is a mobile terminal in a wireless communication system or a part thereof.

17. A software application executable in a device (2), said software application comprising:
- program code for causing said device to execute managing operations that can be performed by one or more servers (3-1, 3-2, 3-3a; 3-1, 3-2, 3-3b) on one or more management objects (220, 221-1, 221-2, 221-3) of said device, wherein each of said management objects is associated with access rights (2200, 2210-1, 2210-2, 2210-3) that define which of said servers are allowed to perform management operations on said management object, wherein said device maintains a certificate (210) that is associated with a root key (310), and wherein a server (3-3a; 3-3b) that is considered to maintain said root key is entitled to control the access rights of all of said management objects of said device.

18. A server (3-1, 3-2, 3-3a; 3-1, 3-2, 3-3b) comprising:
- means (30) for performing managing operations on one or more management objects (220, 221-1, 221-2, 221-3) of a device (2), wherein each of said management objects is associated with access rights (2200, 2210-1, 2210-2, 2210-3) that define which servers from a set of one or more servers are allowed to perform management operations on said management object, wherein said device maintains a certificate (210) that is associated with a root key (310), and wherein a server (3-3a; 3-3b) that is considered to maintain said root key is entitled to control the access rights of all of said management objects of said device.

19. A method comprising:
- performing managing operations on one or more management objects (220, 221-1, 221-2, 221-3) of a device (2), wherein each of said management objects is associated with access rights (2200, 2210-1, 2210-2, 2210-3) that define which servers from a set of one or more servers are allowed to perform management operations on said management object, wherein said device maintains a certificate (210) that is associated with a root key (310), and wherein a server (3-3a; 3-3b) that is considered to maintain said root key is entitled to control the access rights of all of said management objects of said device.

20. A software application executable in a server (3-1, 3-2, 3-3a; 3-1, 3-2, 3-3b), said software application comprising:
- program code for causing said server to perform managing operations on one or more management objects (220, 221-1, 221-2, 221-3) of a device (2), wherein each of said management objects is associated with access rights (2200, 2210-1, 2210-2, 2210-3) that define which servers from a set of one or more servers are allowed to perform management operations on said management object, wherein said device maintains a certificate (210) that is associated with a root key (310), and wherein a server (3-3a; 3-3b) that is considered to maintain said root key is entitled to control the access rights of all of said management objects of said device.

21. A device management system (1a, 1b), comprising at least one device (2) and at least one server (3-1, 3-2, 3-3a; 3-1, 3-2, 3-3b), wherein said server comprises:
- means (30) for performing managing operations on one or more management objects (220, 221-1, 221-2, 221-3) of said device, wherein each of said management objects is associated with access rights (2200, 2210-1, 2210-2, 2210-3) that define which servers from a set of one or more servers are allowed to perform management operations on said management object,
and wherein said device comprises:
- means (20) for executing said managing operations, wherein said device maintains a certificate (210) that is associated with a root key (310), and wherein a server (3-3a; 3-3b) that is considered to maintain said root key is entitled to control the access rights of all of said management objects of said device.

## Patentansprüche

1. Verfahren, umfassend:
- Ausführen von Verwaltungsoperationen, die von einem oder mehreren Servern (3-1, 3-2, 3-3a; 3-1, 3-2, 3-3b) an einem oder mehreren Verwaltungsobjekten (220, 221-1, 221-2, 221-3) eines Geräts (2) durchgeführt werden können, wobei jedes der Verwaltungsobjekte mit Zugangsrechten (2200, 2210-1, 2210-2, 2210-3) assoziiert ist, die festlegen, welchen von den Servern es erlaubt ist, Verwaltungsoperationen an dem Verwaltungsobjekt durchzuführen, wobei das Gerät ein Zertifikat (210) führt, das mit einem Root-Schlüssel (310) assoziiert ist, und wobei ein Server (3-3a; 3-3b), von dem angenommen wird, dass er den Root-Schlüssel führt, berechtigt ist, die Zugangsrechte von allen der Verwaltungsobjekte des Geräts zu kontrollieren.

2. Verfahren nach Anspruch 1, wobei das Gerät (2) das Zertifikat (210) dazu verwendet, Information zu authentifizieren, die mit dem Root-Schlüssel (310) signiert wurde.

3. Verfahren nach Anspruch 1, wobei die Verwaltungsobjekte des Geräts (2) einen Verwaltungsbaum (22) bilden, wobei ein Server (3-1, 3-2, 3-3a; 3-1, 3-2, 3-3b), der die Zugangsrechte eines Eltern-Verwaltungsobjekts (220) in dem Verwaltungsbaum (22) kontrolliert, auch Zugangsrechte von Kind-Verwaltungsobjekten (221-1, 221-2, 221-3) des Eltern-Verwaltungsobjekts (220) kontrolliert, und wobei der Server (3-3a; 3-3b), von dem angenommen wird, dass er den Root-Schlüssel (310) führt, die Zugangsrechte eines Root-Verwaltungsobjekts (220) des Verwaltungsbaums kontrolliert.

4. Verfahren nach Anspruch 1, wobei die Verwaltungsoperationen ein Hinzufügen und/oder Löschen und/oder Ausführen und/oder Erhalten und/oder Ersetzen eines Verwaltungsobjekts (220, 221-1, 221-2, 221-3) oder der Komponenten davon umfassen.

5. Verfahren nach Anspruch 1, wobei die jeweiligen Zugangsrechte eines jeweiligen Verwaltungsobjekts (220, 221-1, 221-2, 221-3) repräsentiert werden durch eine Zugangsrechteliste (2200, 2210-1, 2210-2, 2210-3), die für jede Verwaltungsoperation aus einem Satz von einer oder mehreren Verwaltungsoperationen, die für das jeweilige Verwaltungsobjekt möglich sind, festlegt, welchem Server (3-1, 3-2, 3-3a; 3-1, 3-2, 3-3b) es erlaubt ist, die Verwaltungsoperation auszuführen, wobei die Server durch Server-Identifikatoren in der Zugangsrechteliste repräsentiert werden.

6. Verfahren nach Anspruch 1, wobei alle Verwaltungsobjekte (220, 221-1, 221-2, 221-3) des Geräts (2) mit Zugangsrechten assoziiert sind, die von Schlüsseln abhängen, die mit dem Root-Schlüssel (310) assoziiert sind.

7. Verfahren nach Anspruch 1, wobei das Zertifikat (210) und der Root-Schlüssel (310) mit einem Public-Key-Infrastruktursystem assoziiert sind.

8. Verfahren nach Anspruch 1, wobei das Gerät (2) ein mobiles Endgerät in einem drahtlosen Kommunikationssystem oder ein Teil davon ist.

9. Gerät (2) umfassend:
- Mittel (20) zum Ausführen von Verwaltungsoperationen, die durch einen oder mehrere Server (3-1, 3-2, 3-3a; 3-1, 3-2, 3-3b) an einem oder mehreren Verwaltungsobjekten (220, 221-1, 221-2, 221-3) des Geräts durchgeführt werden können, wobei jedes der Verwaltungsobjekte mit Zugangsrechten (2200, 2210-1, 2210-2, 2210-3) assoziiert ist, die festlegen, welchen von den Servern es erlaubt ist, Verwaltungsoperationen an dem Verwaltungsobjekt durchzuführen, wobei das Gerät ein Zertifikat (210) führt, das mit einem Root-Schlüssel (310) assoziiert ist, und wobei ein Server (3-3a; 3-3b), von dem angenommen wird, dass er den Root-Schlüssel führt, berechtigt ist, die Zugangsrechte von allen der Verwaltungsobjekte des Geräts zu kontrollieren.

10. Gerät nach Anspruch 9, wobei das Gerät (2) das Zertifikat (210) dazu verwendet, Information zu authentifizieren, die mit dem Root-Schlüssel (310) signiert wurde.

11. Gerät nach Anspruch 9, wobei die Verwaltungsobjekte des Geräts (2) einen Verwaltungsbaum (22) bilden, wobei ein Server (3-1, 3-2, 3-3a; 3-1, 3-2, 3-3b), der die Zugangsrechte eines Eltern-Verwaltungsobjekts (220) in dem Verwaltungsbaum (22) kontrolliert, auch die Zugangsrechte von Kind-Verwaltungsobjekten (221-1, 221-2, 221-3) des Eltern-Verwaltungsobjekts (220) kontrolliert und wobei der Server (3-3a; 3-3b), von dem angenommen wird, dass er den Root-Schlüssel (310) führt, die Zugangsrechte eines Root-Verwaltungsobjekts (220) des Verwaltungsbaums kontrolliert.

12. Gerät nach Anspruch 9, wobei die Verwaltungsoperationen ein Hinzufügen und/oder Löschen und/oder Ausführen und/oder Erhalten und/oder Ersetzen eines Verwaltungsobjekts (220, 221-1, 221-2, 221-3) oder der Komponenten davon umfassen.

13. Gerät nach Anspruch 9, wobei die jeweiligen Zugangsrechte eines jeweiligen Verwaltungsobjekts (220, 221-1, 221-2, 221-3) repräsentiert werden durch eine Zugangsrechteliste (2200, 2210-1, 2210-2, 2210-3), die für jede Verwaltungsoperation aus einem Satz von einer oder mehreren Verwaltungsoperationen, die für das jeweilige Verwaltungsobjekt möglich sind, festlegt, welchem Server (3-1, 3-2, 3-3a; 3-1, 3-2, 3-3b) es erlaubt ist, die Verwaltungsoperation auszuführen, wobei die Server durch Server-Identifikatoren in der Zugangsrechteliste repräsentiert werden.

14. Gerät nach Anspruch 9, wobei alle Verwaltungsobjekte (220, 221-1, 221-2, 221-3) des Geräts (2) mit Zugangsrechten assoziiert sind, die von Schlüsseln abhängen, die mit dem Root-Schlüssel (310) assoziiert sind.

15. Gerät nach Anspruch 9, wobei das Zertifikat (210) und der Root-Schlüssel (310) mit einem Public-Key-Infrastruktursystem assoziiert sind.

16. Gerät nach Anspruch 9, wobei das Gerät (2) ein mobiles Endgerät in einem drahtlosen Kommunikationssystem oder ein Teil davon ist.

17. Software-Anwendung, die in einem Gerät (2) ausführbar ist, wobei die Software-Anwendung umfasst:
- Programmcode, um das Gerät zu veranlassen, Verwaltungsoperationen auszuführen, die durch einen oder mehrere Server (3-1, 3-2, 3-3a; 3-1, 3-2, 3-3b) an einem oder mehreren Verwaltungsobjekten (220, 221-1, 221-2, 221-3) des Geräts durchgeführt werden können, wobei jedes der Verwaltungsobjekte mit Zugangsrechten (2200, 2210-1, 2210-2, 2210-3) assoziiert ist, die festlegen, welchen von den Servern es erlaubt ist, Verwaltungsoperationen an dem Verwaltungsobjekt durchzuführen, wobei das Gerät ein Zertifikat (210) führt, das mit einem Root-Schlüssel (310) assoziiert ist, und wobei ein Server (3-3a; 3-3b), von dem angenommen wird, dass er den Root-Schlüssel führt, berechtigt ist, die Zugangsrechte aller der Verwaltungsobjekte des Geräts zu kontrollieren.

18. Server (3-1, 3-2, 3-3a; 3-1, 3-2, 3-3b) umfassend:
- Mittel (30) zum Durchführen von Verwaltungsoperationen an einem oder mehreren Verwaltungsobjekten (220, 221-1, 221-2, 221-3) eines Geräts (2), wobei jedes der Verwaltungsobjekte mit Zugangsrechten (2200, 2210-1, 2210-2, 2210-3) assoziiert ist, die festlegen, welchen Servern aus einem Satz von einem oder mehreren Servern es erlaubt ist, Verwaltungsoperationen an dem Verwaltungsobjekt durchzuführen, wobei das Gerät ein Zertifikat (210) führt, das mit einem Root-Schlüssel (310) assoziiert ist, und wobei ein Server (3-3a; 3-3b), von dem angenommen wird, dass er den Root-Schlüssel führt, berechtigt ist, die Zugangsrechte aller der Verwaltungsobjekte des Geräts zu kontrollieren.

19. Verfahren, umfassend:
- Durchführen von Verwaltungsoperationen an einem oder mehreren Verwaltungsobjekten (220, 221-1, 221-2, 221-3) eines Geräts (2), wobei jedes der Verwaltungsobjekte mit Zugangsrechten (2200, 2210-1, 2210-2, 2210-3) assoziiert ist, die festlegen, welchen Servern aus einem Satz von einem oder mehreren Servern es erlaubt ist, Verwaltungsoperationen an dem Verwaltungsobjekt durchzuführen, wobei das Gerät ein Zertifikat (210) führt, das mit einem Root-Schlüssel (310) assoziiert ist, und wobei ein Server (3-3a; 3-3b), von dem angenommen wird, dass er den Root-Schlüssel führt, berechtigt ist, die Zugangsrechte von allen der Verwaltungsobjekte des Geräts zu kontrollieren.

20. Software-Anwendung, die in einem Server (3-1, 3-2, 3-3a; 3-1, 3-2, 3-3b) ausführbar ist, wobei die Software-Anwendung umfasst:
- Programmcode, um den Server zu veranlassen, Verwaltungsoperationen an einem oder mehreren Verwaltungsobjekten (220, 221-1, 221-2, 221-3) eines Geräts (2) durchzuführen, wobei jedes der Verwaltungsobjekte mit Zugangsrechten (2200, 2210-1, 2210-2, 2210-3) assoziiert ist, die festlegen, welchen Servern aus einem Satz von einem oder mehreren Servern es erlaubt ist, Verwaltungsoperationen an dem Verwaltungsobjekt durchzuführen, wobei das Gerät ein Zertifikat (210) führt, das mit einem Root-Schlüssel (310) assoziiert ist, und wobei ein Server (3-3a; 3-3b), von dem angenommen wird, dass er den Root-Schlüssel führt, berechtigt ist, die Zugangsrechte von allen der Verwaltungsobjekte des Geräts zu kontrollieren.

21. Geräteverwaltungssystem (1a, 1b), das mindestens ein Gerät (2) und mindestens einen Server (3-1, 3-2, 3-3a; 3-1, 3-2, 3-3b) umfasst, wobei der Server umfasst:
- Mittel (30) zum Durchführen von Verwaltungsoperationen an einem oder mehreren Verwaltungsobjekten (220, 221-1, 221-2, 221-3) des Geräts, wobei jedes der Verwaltungsobjekte mit Zugangsrechten (2200, 2210-1, 2210-2, 2210-3) assoziiert ist, die festlegen, welchen Servern aus einem Satz von einem oder mehreren Servern es erlaubt ist, Verwaltungsoperationen an dem Verwaltungsobjekt durchzuführen,
und wobei das Gerät umfasst:
- Mittel (20) zum Ausführen der Verwaltungsoperationen, wobei das Gerät ein Zertifikat (210) führt, das mit einem Root-Schlüssel (310) assoziiert ist, und wobei ein Server (3-3a; 3-3b), von dem angenommen wird, dass er den Root-Schlüssel führt, berechtigt ist, die Zugangsrechte aller der Verwaltungsobjekte des Geräts zu kontrollieren.

## Revendications

1. Procédé comprenant:
- exécuter des opérations de gestion qui peuvent être mises en oeuvre par un ou plusieurs serveurs (3-1, 3-2, 3-3a ; 3-1, 3-2, 3-3b) sur un ou plusieurs objets de gestion (220, 221-1, 221-2, 221-3) d'un dispositif (2), dans lequel chacun desdits objets de gestion est associé à des droits d'accès (2200, 2210-1, 2210-2, 2210-3) qui définissent quels serveurs parmi lesdits serveurs sont autorisés à mettre en oeuvre des opérations de gestion sur ledit objet de gestion, dans lequel ledit dispositif conserve un certificat (210) qui est associé à une clé racine (310), et dans lequel un serveur (3-3a ; 3-3b), qui est considéré en vue de conserver ladite clé racine, est autorisé à commander les droits d'accès de l'intégralité desdits objets de gestion dudit dispositif.

2. Procédé selon la revendication 1, dans lequel ledit dispositif (2) utilise ledit certificat (210) en vue d'authentifier des informations qui ont été signées avec ladite clé racine (310).

3. Procédé selon la revendication 1, dans lequel lesdits objets de gestion dudit dispositif (2) forment une arborescence de gestion (22), dans lequel un serveur (3-1, 3-2, 3-3a ; 3-1, 3-2, 3-3b) qui commande les droits d'accès d'un objet de gestion parent (220) dans ladite arborescence de gestion (22) commande également les droits d'accès d'objets de gestion enfants (221-1, 221-2, 221-3) dudit objet de gestion parent (220), et dans lequel ledit serveur (3 -3a ; 3-3b), qui est considéré en vue de conserver ladite clé racine (310), commande les droits d'accès d'un objet de gestion racine (220) de ladite arborescence de gestion.

4. Procédé selon la revendication 1, dans lequel lesdites opérations de gestion comprennent l'ajout et/ou la suppression et/ou l'exécution et/ou l'obtention et/ou le remplacement d'un objet de gestion (220, 221-1, 221-2, 221-3) ou de composants de celui-ci.

5. Procédé selon la revendication 1, dans lequel lesdits droits d'accès respectifs d'un objet de gestion respectif (220, 221-1, 221-2, 221-3) sont représentés par une liste de droits d'accès (2200, 2210-1, 2210-2, 2210-3) qui définit, pour chaque opération de gestion sur un ensemble d'une ou plusieurs opérations de gestion qui sont possibles pour ledit objet de gestion respectif, quel serveur (3-1, 3-2, 3-3a ; 3-1, 3-2, 3-3b) est autorisé à mettre en oeuvre ladite opération de gestion, dans lequel lesdits serveurs sont représentés par des identifiants de serveur dans ladite liste de droits d'accès.

6. Procédé selon la revendication 1, dans lequel tous les objets de gestion (220, 221-1, 221-2, 221-3) dudit dispositif (2) sont associés à des droits d'accès qui dépendent de clés associées à ladite clé racine (310).

7. Procédé selon la revendication 1, dans lequel ledit certificat (210) et ladite clé racine (310) sont associés à un système d'infrastructure à clés publiques.

8. Procédé selon la revendication 1, dans lequel ledit dispositif (2) est un terminal mobile dans un système de communication sans fil ou une partie de celui-ci.

9. Dispositif (2) comprenant:
- un moyen (20) pour exécuter des opérations de gestion qui peuvent être mises en oeuvre par un ou plusieurs serveurs (3-1, 3-2, 3-3a ; 3-1, 3-2, 3-3b) sur un ou plusieurs objets de gestion (220, 221-1, 221-2, 221-3) dudit dispositif ;
dans lequel chacun desdits objets de gestion est associé à des droits d'accès (2200, 2210-1, 2210-2, 2210-3) qui définissent quels serveurs parmi lesdits serveurs sont autorisés à mettre en oeuvre des opérations de gestion sur ledit objet de gestion, dans lequel ledit dispositif conserve un certificat (210) qui est associé à une clé racine (310), et dans lequel un serveur (3-3a ; 3-3b), qui est considéré en vue de conserver ladite clé racine, est autorisé à commander les droits d'accès de l'intégralité desdits objets de gestion dudit dispositif.

10. Dispositif selon la revendication 9, dans lequel ledit dispositif (2) utilise ledit certificat (210) pour authentifier des informations qui ont été signées avec ladite clé racine (310).

11. Dispositif selon la revendication 9, dans lequel lesdits objets de gestion dudit dispositif (2) forment une arborescence de gestion (22), dans lequel un serveur (3-1, 3-2, 3-3a ; 3-1, 3-2, 3-3b) qui commande les droits d'accès d'un objet de gestion parent (220) dans ladite arborescence de gestion (22) commande également les droits d'accès d'objets de gestion enfants (221-1, 221-2, 221-3) dudit objet de gestion parent (220), et dans lequel ledit serveur (3 -3a ; 3-3b), qui est considéré en vue de conserver ladite clé racine (310), commande les droits d'accès d'un objet de gestion racine (220) de ladite arborescence de gestion.

12. Dispositif selon la revendication 9, dans lequel lesdites opérations de gestion comprennent l'ajout et/ou la suppression et/ou l'exécution et/ou l'obtention et/ou le remplacement d'un objet de gestion (220, 221-1, 221-2, 221-3) ou de composants de celui-ci.

13. Dispositif selon la revendication 9, dans lequel lesdits droits d'accès respectifs d'un objet de gestion respectif (220, 221-1, 221-2, 221-3) sont représentés par une liste de droits d'accès (2200, 2210-1, 2210-2, 2210-3) qui définit, pour chaque opération de gestion sur un ensemble d'une ou plusieurs opérations de gestion qui sont possibles pour ledit objet de gestion respectif, quel serveur (3-1, 3-2, 3-3a ; 3-1, 3-2, 3-3b) est autorisé à mettre en oeuvre ladite opération de gestion, dans lequel lesdits serveurs sont représentés par des identifiants de serveur dans ladite liste de droits d'accès.

14. Dispositif selon la revendication 9, dans lequel tous les objets de gestion (220, 221-1, 221-2, 221-3) dudit dispositif (2) sont associés à des droits d'accès qui dépendent de clés associées à ladite clé racine (310).

15. Dispositif selon la revendication 9, dans lequel ledit certificat (210) et ladite clé racine (310) sont associés à un système d'infrastructure à clés publiques.

16. Dispositif selon la revendication 9, dans lequel ledit dispositif (2) est un terminal mobile dans un système de communication sans fil ou une partie de celui-ci.

17. Application logicielle exécutable dans un dispositif (2), ladite application logicielle comprenant :
- un code de programme pour amener ledit dispositif à exécuter des opérations de gestion qui peuvent être mises en oeuvre par un ou plusieurs serveurs (3-1, 3-2, 3-3a ; 3-1, 3-2, 3-3b) sur un ou plusieurs objets de gestion (220, 221-1, 221-2, 221-3) dudit dispositif, dans lequel chacun desdits objets de gestion est associé à des droits d'accès (2200, 2210-1, 2210-2, 2210-3) qui définissent quels serveurs parmi lesdits serveurs sont autorisés à mettre en oeuvre des opérations de gestion sur ledit objet de gestion, dans lequel ledit dispositif conserve un certificat (210) qui est associé à une clé racine (310), et dans lequel un serveur (3-3a ; 3-3b), qui est considéré en vue de conserver ladite clé racine, est autorisé à commander les droits d'accès de l'intégralité desdits objets de gestion dudit dispositif.

18. Serveur (3-1, 3-2, 3-3a ; 3-1, 3-2, 3-3b) comprenant :
- un moyen (30) pour mettre en oeuvre des opérations de gestion sur un ou plusieurs objets de gestion (220, 221-1, 221-2, 221-3) d'un dispositif (2), dans lequel chacun desdits objets de gestion est associé à des droits d'accès (2200, 2210-1, 2210-2, 2210-3) qui définissent quels serveurs parmi un ensemble d'un ou plusieurs serveurs, sont autorisés à mettre en oeuvre des opérations de gestion sur ledit objet de gestion, dans lequel ledit dispositif conserve un certificat (210) qui est associé à une clé racine (310), et dans lequel un serveur (3-3a ; 3-3b), qui est considéré en vue de conserver ladite clé racine, est autorisé à commander les droits d'accès de l'intégralité desdits objets de gestion dudit dispositif.

19. Procédé comprenant:
- mettre en oeuvre des opérations de gestion sur un ou plusieurs objets de gestion (220, 221-1, 221-2, 221-3) d'un dispositif (2), dans lequel chacun desdits objets de gestion est associé à des droits d'accès (2200, 2210-1, 2210-2, 2210-3) qui définissent quels serveurs parmi un ensemble d'un ou plusieurs serveurs, sont autorisés à mettre en oeuvre des opérations de gestion sur ledit objet de gestion, dans lequel ledit dispositif conserve un certificat (210) qui est associé à une clé racine (310), et dans lequel un serveur (3-3a ; 3-3b), qui est considéré en vue de conserver ladite clé racine, est autorisé à commander les droits d'accès de l'intégralité desdits objets de gestion dudit dispositif.

20. Application logicielle exécutable dans un serveur (3-1, 3-2, 3-3a ; 3-1, 3-2, 3-3b), ladite application logicielle comprenant :
- un code de programme pour amener ledit serveur à mettre en oeuvre des opérations de gestion sur un ou plusieurs objets de gestion (220, 221-1, 221-2, 221-3) d'un dispositif (2), dans lequel chacun desdits objets de gestion est associé à des droits d'accès (2200, 2210-1, 2210-2, 2210-3) qui définissent quels serveurs, d'un ensemble d'un ou plusieurs serveurs, sont autorisés à mettre en oeuvre des opérations de gestion sur ledit objet de gestion, dans lequel ledit dispositif conserve un certificat (210) qui est associé à une clé racine (310), et dans lequel un serveur (3-3a ; 3-3b), qui est considéré en vue de conserver ladite clé racine, est autorisé à commander les droits d'accès de l'intégralité desdits objets de gestion dudit dispositif.

21. Système de gestion de dispositif (1a, 1b), comprenant au moins un dispositif (2) et au moins un serveur (3-1, 3-2, 3-3a ; 3-1, 3-2, 3-3b), dans lequel ledit serveur comprend :
- un moyen (30) pour mettre en oeuvre des opérations de gestion sur un ou plusieurs objets de gestion (220, 221-1, 221-2, 221-3) dudit dispositif, dans lequel chacun desdits objets de gestion est associé à des droits d'accès (2200, 2210-1, 2210-2, 2210-3) qui définissent quels serveurs parmi un ensemble d'un ou plusieurs serveurs, sont autorisés à mettre en oeuvre des opérations de gestion sur ledit objet de gestion, et
dans lequel ledit dispositif comprend :
- un moyen (20) pour exécuter lesdites opérations de gestion, dans lequel ledit dispositif conserve un certificat (210) qui est associé à une clé racine (310), et dans lequel un serveur (3-3a ; 3-3b), qui est considéré en vue de conserver ladite clé racine, est autorisé à commander les droits d'accès de l'intégralité desdits objets de gestion dudit dispositif.
